Europäisches Patentamt

European Patent Office

Office européen des brevets

(11) Veröffentlichungsnummer: **0 303 328**
**A1**

## EUROPÄISCHE PATENTANMELDUNG

(21) Anmeldenummer: 88201719.7

(22) Anmeldetag: 09.08.88

(51) Int. Cl.4: **A22C 13/00**

(30) Priorität: 12.08.87 DE 8710975 U

(43) Veröffentlichungstag der Anmeldung:
15.02.89 Patentblatt 89/07

(84) Benannte Vertragsstaaten:
**ES**

(71) Anmelder: **Naturin-Werk Becker & Co.**
**Badeniastrasse 13**
**D-6940 Weinheim/Bergstrasse(DE)**

(72) Erfinder: **Jäger, Herbert**
**Robert-Bosch-Strasse 2**
**D-6944 Hemsbach/Bergstrasse(DE)**

(74) Vertreter: **Klöpsch, Gerald, Dr.-Ing.**
**An Gross St. Martin 6**
**D-5000 Köln 1(DE)**

(54) **Mit einer Kollagenflachfolie umhüllte Wurstware mit netzartiger Oberflächenstruktur und Verfahren zu ihrer Herstellung.**

(57) Die Erfindung betrifft eine Wurstware, deren Brätfüllung von einer Umhüllung, gebildet aus wenigstens einer Kollagenflachfolie mit seitlich überlappenden Rändern umgeben ist und deren äussere Oberfläche netzartig strukturiert ist. Die Erfindung betrifft ferner eine Verfahren zur Herstellung solcher Wurstwaren.

*Fig.1*

EP 0 303 328 A1

## Mit einer Kollagenflachfolie umhüllte Wurstware mit netzartiger Oberflächenstruktur und Verfahren zu ihrer Herstellung

Die Erfindung betrifft eine Wurstware, deren Brätfüllung von einer Umhüllung, gebildet aus wenigstens einer Kollagenflachfolie mit seitlich überlappenden Rändern, umgeben ist und deren äussere Oberfläche netzartig strukturiert ist. Die Erfindung betrifft ferner ein Verfahren zur Herstellung solcher Wurstwaren.

Es ist bekannt, Brühwurst oder Rohwurst in einem Naturdarm mit einem Netz zu umgeben oder mit Garn zu umschnüren, damit der Darm größtenteils von der Beanspruchung durch das Gewicht der Wurst und durch radiale Druckkräfte, die beim Brühen bzw. beim Reifen auftreten, entlastet wird. Solche Würste zeigen eine ansprechend strukturierte Oberfläche, weil der Naturdarm sehr elastisch ist und sich, verursacht durch den Innendruck, zwischen den Fäden des Netzes oder der Umschnürung kissenartig vorwölbt. Heute werden dem Naturdarm vielfach künstliche Wursthüllen vorgezogen, weil sie durch ihre gleichmäßige Festigkeit bei der Verarbeitung viele Vorteile bieten, unter anderem den, daß die Unterstützung durch ein Netz grundsätzlich entfallen kann.

Wenn man allerdings aus Gründen der Optik auf die Verwendung eines Netzes Wert legt, so befriedigen künstliche Wursthüllen wegen der ihnen eigenen Festigkeit und damit verbundenen geringen Vorwölbung weni ger. Wollte man andererseits die elastischen Eigenschaften von z.B. Kollagen-Wursthüllen diesen Wünschen anpassen, so würden sich bereits bei der Herstellung entsprechend breiter und dünner nachgiebiger schlauchförmiger Hüllen unüberwindliche Schwierigkeiten zeigen. Bis heute ist es jedenfalls nicht gelungen, solche Wursthüllen mit einem Durchmesser von 60 mm und mehr mit einer Wandstärke kleiner als 50 μm als Schlauchfolie herzustellen.

Aus der EP-A-O 175 173 ist es bereits bekannt, feste Fleischwaren mit zusammenhängender Oberfläche wie Kochschinken mit einer Kollagenflachfolie und einem Netz zu umhüllen. Die Anwendung derartiger Kollagenflachfolien zur Umhüllung bzw. Verpackung von Wurstware insbesondere Brühwurst oder Rohwurst, die mit einem Netz umgeben werden, hat der Fachmann aber bisher nicht in Betracht gezogen. Es wäre nämlich zu erwarten gewesen, daß eine solche Kollagenfolie, deren ohnehin begrenzte Festigkeitseigenschaften vor allem unter Feuchteeinwirkung sich stark verschlechtern, d.h. deren Naßfestigkeit gering ist, platzt, wenn sie mit Wurstbrät gefüllt wird, das eine pastöse Flüssigkeit mit vergleichsweise hohem Wassergehalt darstellt und dessen Oberfläche nicht - wie bei einem Fleischstück - zusammenhängend ist, sondern das aus diskreten feinen Partikeln besteht. Ein Platzen ist vor allem an solchen Stellen zu befürchten, wo die vergleichsweise mechanisch nur schwach beanspruchbare Kollagenfolie nicht durch die Maschen des umhüllenden Schlauchnetzes abgestützt und verstärkt wird. Ein solches Platzen, das sich bei einer Fleischware mit zusammenhängender Oberfläche nicht störend bemerkbar macht, würde im Fall einer Wurstfüllung zum Austreten des vergleichsweise dünnflüssigen Wurstbräts an den beschädigten Stellen unter Druckverlust und damit zur allgemeinen Abflachung der kissenartigen Vorwölbungen der Folie führen.

Überraschenderweise hat sich jedoch gezeigt, daß derartige Kollagenfolien wie sie zur Umhüllung von Fleischwaren mit zusammenhängender Oberfläche (Kochschinken) bereits eingesetzt worden sind, ohne Wandstärkenvergrößerung, d.h. ohne zusätzlichen Maßnahmen zur Verbesserung der mechanischen Eigenschaften wie der Berstfestigkeit auch zur Umhüllung von Wurstwaren, die mit einem flüssigen bzw. pastösen Inhalt gefüllt werden, eignen, ohne daß Schädigungen auftreten.

Ausgehend von dem vorbeschriebenen Stand der Technik ist es daher Aufgabe der Erfindung auch für Wurstwaren, deren Inhalt (Brät) pastös, sogar dünnflüssig ist und das keine zusammenhängende Oberfläche aufweist, und zwar für Wurstwaren, die neben der Umhüllung mit einem Netz umgeben werden, eine Umhüllung aus einer Kollagenflachfolie bereitzustellen, die allen Anforderungen beim Füllen und der nachfolgenden Hitzebehandlung entspricht, ohne zu platzen.

Gegenstand der Erfindung ist somit eine Wurstware, deren Brätfüllung von einer Umhüllung, gebildet aus wenigstens einer Kollagenflachfolie mit seitlich überlappenden Rändern, umgeben ist und deren äussere Oberfläche netzartig strukturiert ist.

Gemäß einer Ausführungsform wird die netzartige Struktur von einem die Wurstware umgebenden Netz, vorzugsweise einem textilen Schlauchnetz gebildet.

Deartige Kollagenflachfolien werden mit einer Wandstärke von weniger als 20 μm angeboten. Sie zeigen bei guter Dehnbarkeit die für den Anwendungsfall ausreichende Festigkeit.

Geeignete Kollagenflachfolien sind bereits bekannt. Sie werden unter anderem in der DE-PS 642 922 beschrieben. Solche Kollagen-Folien können auf einer Folien-Gießmaschine hergestellt werden (DE-PS 842 825 und US-PS 2,747,228).

Übliche Breiten sind 0,38 und 0,57 m. Die Wandstärke beträgt 7 - 40 μm, vorzugsweise 15 - 30 μm.

Als textile Schlauchnetze eignen sich alle branchenüblichen Baumwollnetze mit rechteckigen, sechseckigen oder rautenförmigen Maschen. Bevorzugt werden solche Netze eingesetzt, in die in der Umfangsrichtung elastische Fäden eingearbeitet sind.

Gemäß einer weiteren Ausbildung der Erfindung kann die netzartige Struktur der äusseren Oberfläche direkt aufgeprägt werden. Somit betrifft die Erfindung auch eine Wurstware in einer Kollagenflachfolie, bei der die netzartige Struktur direkt in die äussere Oberfläche bleibend eingeprägt ist.

Bei dieser Ausführungsform ist die Netzstruktur integraler Bestandteil der Oberfläche der Wurstware, während sie bei der Umhüllung mit einem Netz als von der Wurstware getrennter Bestandteil ausgebildet ist. Eine derartige Ausführungsform hat den Vorteil, daß das Netz eingespart wird. Bei dieser Ausführungsform ist überraschend, daß nur eine vorübergehende Deformation der Oberfläche zur Erzeugung einer netzartigen Struktur ausreicht, sofern das Wurstbrät unter Beibehaltung der Deformation zwecks Erzeugung der Netzstruktur einer Wärme- oder Reifebehandlung unterworfen wird, bei der das Wurstbrät koaguliert. Danach kann die Einwirkung einer Verformungskraft beendet werden:

Die Oberfläche der Hülle ist bleibend verformt und weist abgebildet die Strukturen des formgebenden, die Deformationskraft ausübenden Gehäuses (z.B. ist ein Drahtkorb besonders geeignet) auf.

Gegenstand der Erfindung ist ferner ein Verfahren zur Herstellung derartiger Wurstwaren, das dadurch gekennzeichnet ist, daß eine Umhüllung aus wenigstens einer Kollagenflachfolie mit seitlich überlappenden Rändern gebildet wird, die Brätfüllung in die so gebildete Umhüllung eingepresst und auf die äussere Oberfläche der umhüllten Wurstware eine netzartige Struktur aufgebracht wird.

Weitere Einzelheiten des Verfahrens werden nachfolgend anhand der Füllvorrichtung und Figurenbeschreibung erläutert:

Zum Füllen der erfindungsgemäßen Wurstwaren wird eine Füllvorrichtung vorwendet, wie sie ähnlich in der EP-A-O 175 173, Fig. 7 + 8 beschrieben wurde, bei der jedoch an die Stelle der Auflagefläche (29) eine feste Verbindung mit dem Rohr eines Vakuumfüllers tritt. Mit einer derart angepassten Füllvorrichtung können Würste aller gängigen Kaliber von 60 bis 150 mm Durchmesser gefüllt werden, wenn die Kombination der Rohre (24-26) im Durchmesser so bemessen wird, daß jeweils das Rohr (26) Nennkaliber zeigt. Die EP-A-O 175 173 wird durch Verweis in die Beschreibung aufgenommen.

Nachdem die Folie (28,33) von der Rolle (31) abgezogen und zwischen die Rohre (24, 25) eingefädelt wurde, wobei die Kanten (34) einander überlappen, und ein Netz auf das Rohr (24) aufgezogen wurde, wird zunächst das Rohr (26) vom Füller luftfrei mit Brät gefüllt. Darauf werden Folie und Netz soweit vorgezogen, daß sie zusammengefaßt und mit einem Clip verschlossen werden können. Nun kann mit dem Füllen begonnen werden, wobei durch den Fülldruck die entstehende Wurst vom Brät prall ausgefüllt wird, während Folie und Netz vom Gerät abgezogen werden. Nach Unterbrechung der Brätzufuhr wird die Umhüllung zusammengequetscht und mit einem Doppelclipgerät verschlossen. Zwischen den beiden Clips wird die fertige Wurst abgeschnitten. In das am Gerät verbliebene, mit dem zweiten Clip verschlossene leere Hüllenende kann sofort die nächste Wurst gefüllt werden.

Nach dem geschilderten Verfahren können Brühwürste und Rohwürste gefüllt werden, die anschließend wie handwerksüblich weiter behandelt werden sollen, ohne daß wegen der geringen Wandstärke der Kollagenfolie oder deshalb, weil die Längskanten der Folie ohne feste Verbindung nur etwa 10 - 20 mm überlappt sind, besondere Rücksicht genommen werden müßte.

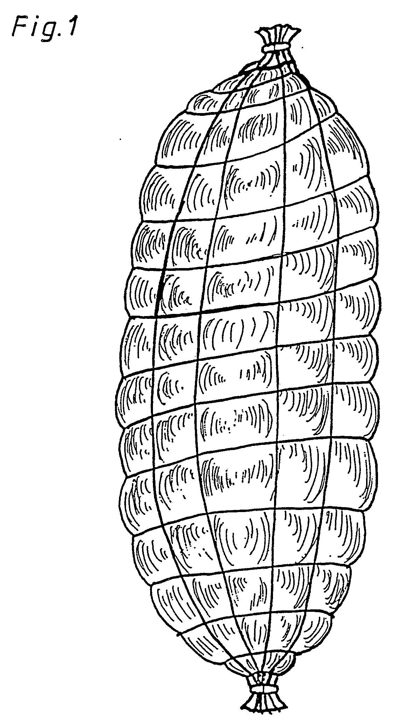

Nach der Fertigstellung sehen die Brüh- und Rohwürste im Netz (siehe Figur 1) sehr ansprechend, appetitlich und rustikal aus. Der Wurstinhalt ist sehr gut zu erkennen, weil die dünne Kollagenfolie fast klar durchsichtig ist. Die Fleischfarbe wird nicht durch einen weißlich-opaken Darm abgeschwächt. Zwischen den Maschen ist die Folie durch den Druck des Brätes kissenartig nach außen vorgewölbt. Die Vorwölbung beträgt zwischen 1 und 10 mm.

Vor dem Aufschneiden der Würste sollte das Netz entfernt werden. Das ist ohne weiteres möglich, weil bei der Fertigstellung zwischen Folie und Netz keine Haftung ausgebildet wird. Dagegen ist es nicht möglich und auch nicht erforderlich, die dünne Folie von den Würsten abzuziehen, weil diese praktisch nicht mehr zu finden ist. Bei Brühwürsten hat sie den gleichen Charakter wie die zarte Saitlingshaut eines Wiener-Würstchens. Die Kollagenfolie wird nämlich integraler Bestandteil des hergestellten Lebensmittels und ist zum Mitverzehr bestimmt. Bei großkalibrigen Roh- und Brühwürsten ist es bisher nicht möglich, eine zum Mitverzehr bestimmte Kollagenschlauchfolie einzusetzen. Eine solche Folie muß, um den Druck des Bräts aushalten zu können, eine minimale Wandstärke von 65 μm aufweisen, die den Verzehr zusammen mit der Wurst nicht erlaubt.

Erfindungsgemäß lassen sich derartige großkalibrige Roh- und Brühwürste im Netz rationell herstellen. Sie sehen sehr ansprechend, appetitlich und rustikal aus.

Gemäß einer weiteren Ausbildung der Erfindung kann auf das Netz verzichtet werden, indem der Oberfläche der mit der Kollagenfolie umhüllten Wurstware eine Netzstruktur bleibend aufgeprägt wird. Diese Ausführungsform wird hergestellt, indem die netzartige Struktur auf der äußeren Oberfläche der umhüllten und gefüllten Wurstware durch Einwirkung einer Verformungskraft gebildet und durch eine anschließende Wärme- oder Reifebehandlung zwecks Koagulierung des Wurstbräts unter Beibehaltung der Deformationskraft bleibend fixiert wird. Bei dieser Ausführungsform verwendet man anstelle von Textilnetzen vorzugsweise Drahtkörbe, die über das Rohr 24 der Füllvorrichtung gestülpt werden.

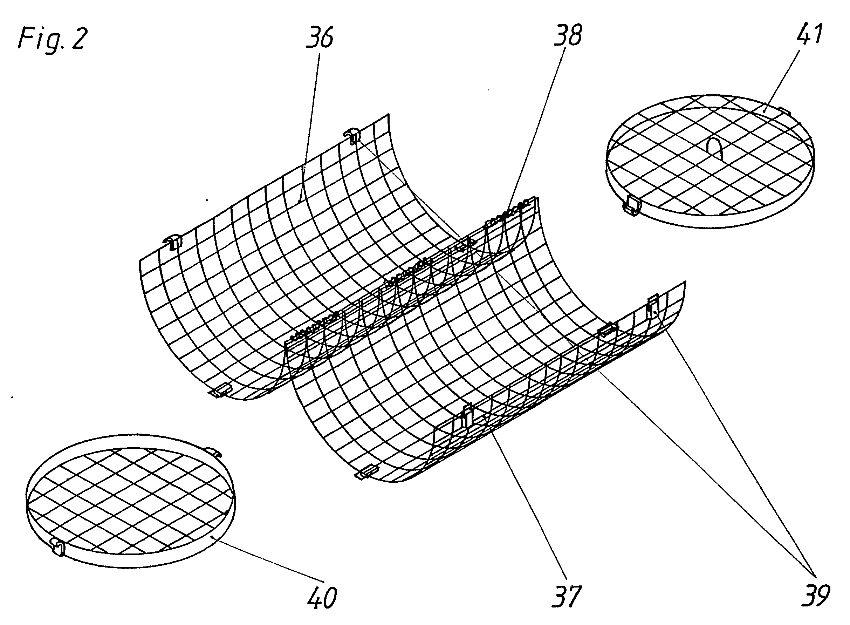

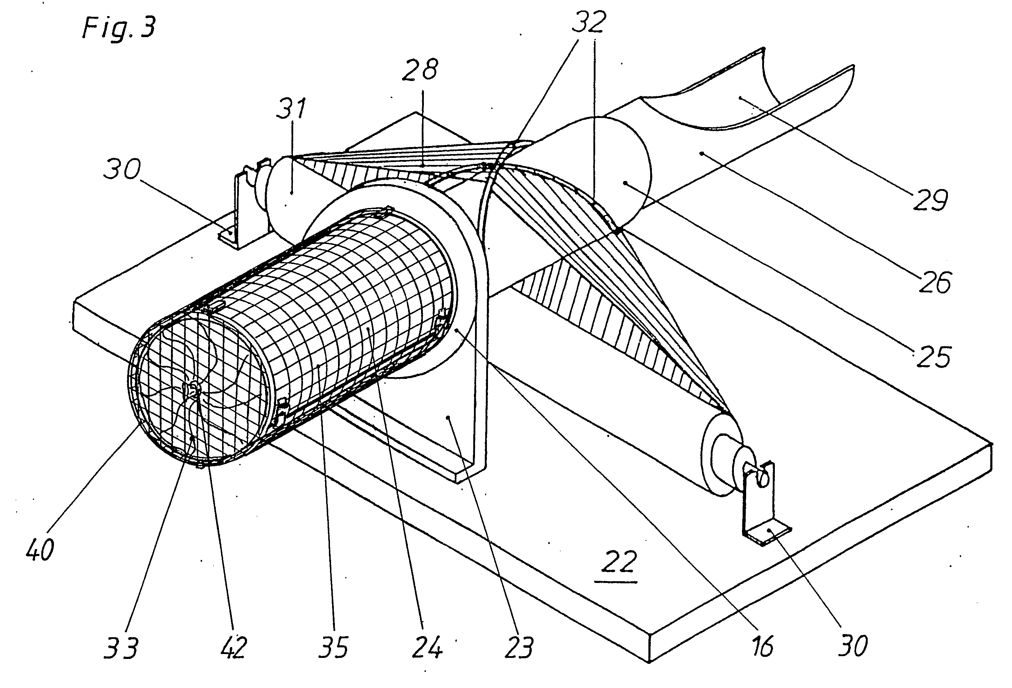

Die Figur 2 zeigt einen Drahtkorb, der für die anschließend beschriebene Vorgehensweise geeignet ist. Der Zylinder ist in Längsrichtung in zwei Halbschalen 36,37 geteilt. Beide Hälften sind einseitig durch ein Scharnier 38 schwenkbar miteinander verbunden und werden anderseitig mit Schnellverschlüssen 39 verschlossen. An den Stirnseiten ist der Zylinder mit abnehmbaren Deckeln 40,41 versehen.

Die Figur 3 zeigt die in der EP-A-0175173 beschriebene Vorrichtung mit einem zum Füllen bereiten Drahtkorb.
Zum Füllen wird die Folie 33 vor dem Ausstoßende 25,26 der Füllvorrichtung zusammengenommen und ggfs. mit einem Clip 42 verschlossen. Der Drahtkorb wird mit einem offenen Ende über das Rohr 24 geschoben bis das andere geschlossene Ende an das Rohr 24 anstößt.

Nun wird das Brät durch das Rohr 26 ausgestoßen und füllt die Folie, die sich dabei von innen an den Drahtkorb 35 anlegt. Der Drahtkorb wird gleichzeitig von dem Brät nach vorn geschoben. Wenn der Korb ganz gefüllt ist, wird die Füllpresse angehalten und das Brät in der Folie 33 zwischen Korb 35 und Rohr 26 in axialer Richtung verdrängt, so daß ggfs. ein Doppelclip 43 gesetzt werden kann. Das Brät sollte so bemessen sein, daß der Drahtkorb nach dem Anbringen des zweiten Deckels 41 vollständig gefüllt ist.

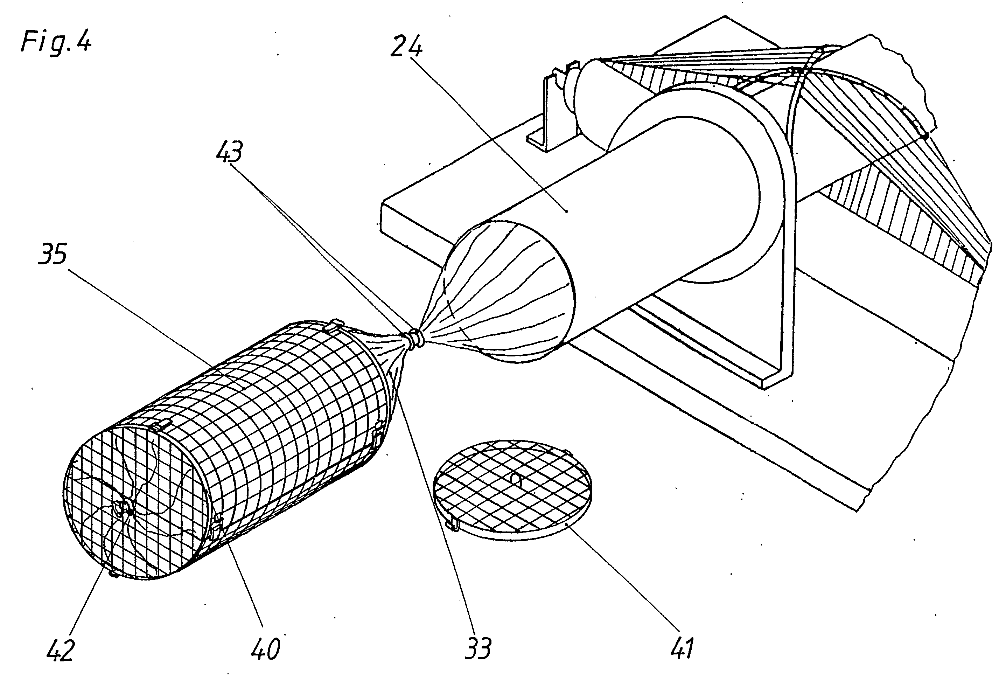

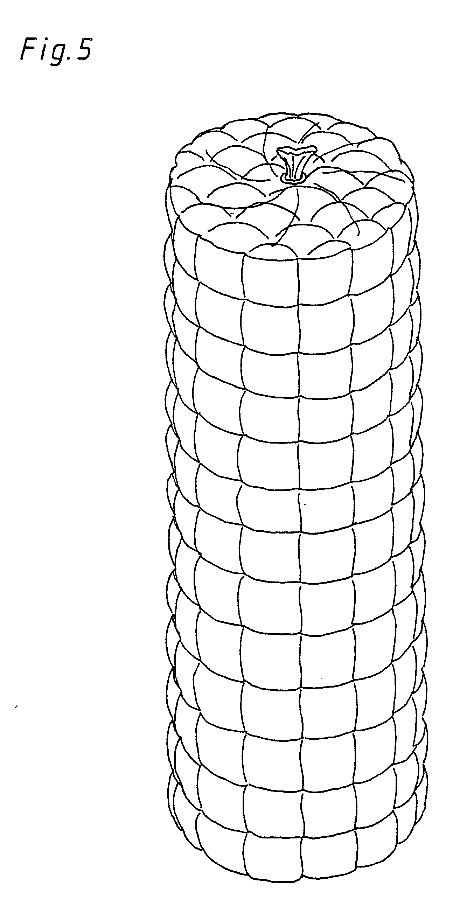

Figur 4 zeigt die oben genannte Vorrichtung mit gefülltem Drahtkorb und abgeclipter Folie. Die Wurstware ist nun allseitig von Folie umschlossen, wobei der Drahtkorb eine tragende und formende Funktion ausübt. Das Muster des Drahtnetzes, aus dem der Korb gefertigt ist, bildet sich auf der Oberfläche ab, wobei sich die Folie in den Maschen des Netzes kissenartig vorwölbt.

Die Wurstware kann nach dem Verschließen des Korbes in der üblichen Weise weiterbehandelt werden:
Eine Brühwurst wird zunächst umgerötet, dann getrocknet, geräuchert und schließlich gebrüht. Auch eine Rohwurst wird umgerötet und gegebenenfalls geräuchert und danach einige Tage bis einige Wochen gereift.

Erst wenn die Behandlung abgeschlossen ist, wird der Drahtkorb geöffnet und die fertige Wurst entnommen. Die Folie hat sich dann unlösbar mit dem Wurstbrät verbunden, während sie andererseits als Trennmittel gegenüber dem Drahtkorb wirkt und es erlaubt, die Wurst leicht zu entnehmen.

## Ansprüche

1. Wurstware, deren Brätfüllung von einer Umhüllung, gebildet aus wenigstens einer Kollagenflachfolie mit seitlich überlappenden Rändern, umgeben ist und deren äussere Oberfläche netzartig strukturiert ist.

2. Wurstware nach Anspruch 1, dadurch gekennzeichnet, daß die netzartige Struktur von einem die Wurstware umgebenden Netz, vorzugsweise einem textilen Schlauchnetz gebildet wird.

3. Wurstware nach Anspruch 1 oder 2, dadurch gekennzeichnet, daß das Netz Maschenweiten zwischen 5 und 20 mm Seitenlänge aufweist.

4. Wurstware nach Anspruch 3, dadurch gekennzeichnet, daß die Maschen des Netzes polyedrisch, vorzugsweise rechteckig, sechseckig oder rautenförmig geknüpft sind.

5. Wurstware nach Anspruch 3 oder 4, dadurch gekennzeichnet, daß in das Netz in Längs- und/oder Querrichtung elastische Fäden eingearbeitet sind.

6. Wurstware nach Anspruch 1, dadurch gekennzeichnet, daß die netzartige Struktur direkt in die äussere Oberfläche bleibend eingeprägt ist.

7. Wurstware nach Anspruch 6, dadurch gekennzeichnet, daß die netzartige Struktur durch Verformung der Oberfläche während oder nach dem Füllen gebildet und durch eine Wärmebehandlung zwecks Koagulierung des Wurstbräts bleibend fixiert wird.

8. Wurstware nach Anspruch 1 oder 6, dadurch gekennzeichnet, daß die Kollagenflachfolie eine Stärke zwischen 7 und 40 μm, vorzugsweise zwischen 15 und 30 μm hat.

9. Wurstware nach Anspruch 1 oder 6, dadurch gekennzeichnet, daß die Füllung aus einem Brühwurstbrät besteht und nach dem Füllen in üblicher Weise geräuchert und gebrüht wird.

10. Wurstware nach Anspruch 1 oder 6, dadurch gekennzeichnet, daß die Füllung aus Rohwurstbrät besteht und in üblicher Weise geräuchert und/oder gereift wird.

11. Verfahren zur Herstellung der Wurstwaren nach Ansprüchen 1 bis 10, dadurch gekennzeichnet, daß eine Umhüllung aus wenigstens einer Kollagenflachfolie mit seitlich überlappenden Rändern gebildet wird, die Brätfüllung in die so gebildete Umhüllung eingepresst und auf die äussere Oberfläche der umhüllten Wurstware eine netzartige Struktur aufgebracht wird.

12. Verfahren nach Anspruch 11, <u>dadurch gekennzeichnet</u>, daß die netzartige Struktur durch Umhüllung mit einem Netz, vorzugsweise einem textilen Schlauchnetz als von der Oberfläche der Wurstware getrennter Bestandteil aufgebracht wird.

13. Verfahren nach Anspruch 11, <u>dadurch gekennzeichnet</u>, daß die netzartige Struktur auf der äusseren Oberfläche der umhüllten und gefüllten Wurstware durch Einwirkung einer Verformungskraft gebildet und durch eine anschließende Wärmebehandlung zwecks Koagulierung des Wurstbräts unter Beibehaltung der Deformationskraft bleibend fixiert wird.

14. Verfahren nach Anspruch 13, <u>dadurch gekennzeichnet</u>, daß während des Umhüllens, Füllens und der nachfolgenden Wärmebehandlung zwecks Koagulierung des Wurstbräts die Wurstware von einem formgebenden Gehäuse umgeben ist, welches die Deformation der Oberfläche bewirkt und welches im Stande ist, der Oberfläche als integralem Bestandteil eine Netzstruktur aufzuprägen.

17. Verfahren nach Anspruch 16, <u>dadurch gekennzeichnet</u>, daß zur Erzeugung der Deformationskraft ein Drahtkorb verwendet wird.

18. Verfahren nach Anspruch 17, <u>dadurch gekennzeichnet</u>, daß der Drahtkorb zylindrisch ausgebildet und in Halbschalenbauweise ausgeführt ist und stirnseitig mit je einem planen Deckel aus vorzugsweise dem gleichen Drahtgeflecht wie der Drahtkorb verschließbar ist.

EP 0 303 328 A1

Fig.1

Fig. 2

39

37

40

41

38

36

EP 0 303 328 A1

Fig. 3

EP 0 303 328 A1

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 175 173 (BECKER) <br> * Insgesamt * <br> --- | 1-5,8, 11,12 | A 22 C 13/00 |
| Y | US-A-1 505 218 (SARTORE) <br> * Seite 1, Zeile 97 - Seite 1, Zeile 110; Figur 4 * <br> --- | 1-5,8, 11,12 | |
| A | DE-A-1 632 124 (HEINRICH) <br> * Ansprüche 1-6; Figuren 1,2 * <br> --- | 17,18 | |
| A | EP-A-0 058 735 (TADDIA) <br> * Insgesamt * <br> --- | 1 | |
| P,A | CH-A- 662 543 (WIBERG) <br> * Insgesamt * <br> --- | 1,2,5 | |
| A | US-A-2 922 186 (SARTORE) <br> --- | | |
| A | FR-A-1 058 694 (CITTORIO) <br> --- | | |
| A | EP-A-0 198 486 (BECKER) <br> --- | | RECHERCHIERTE SACHGEBIETE (Int. Cl.4) |
| A | DE-C- 277 585 (SCHWARZ) <br> --- | | A 22 C |
| A | FR-A-1 102 854 (DICK) <br> --- | | |
| A | CH-A- 175 015 (MARTI) <br> --- | | |
| A | GB-A- 909 778 (UNITED GAS INDUSTRIES) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 31-10-1988 | DE LAMEILLIEURE D. |